**Europäisches Patentamt**

(19) **European Patent Office**

**Office européen des brevets**

(11) Publication number : **0 304 446 B1**

(12) **EUROPEAN PATENT SPECIFICATION**

(45) Date of publication of patent specification :
24.06.92 Bulletin 92/26

(51) Int. Cl.⁵ : **B67D 5/40, F04B 43/12**

(21) Application number : **88901845.3**

(22) Date of filing : **17.02.88**

(86) International application number :
**PCT/FI88/00024**

(87) International publication number :
**WO 88/06138 25.08.88 Gazette 88/19**

(54) **DOSAGE EQUIPMENT.**

(30) Priority : **20.02.87 FI 870733**

(43) Date of publication of application :
**01.03.89 Bulletin 89/09**

(45) Publication of the grant of the patent :
**24.06.92 Bulletin 92/26**

(84) Designated Contracting States :
**AT BE CH DE FR GB IT LI LU NL SE**

(56) References cited :
**US-A- 3 778 195**
**US-A- 3 832 096**

(73) Proprietor : **LABSYSTEMS OY**
**Pulttitie 8**
**SF-00880 Helsinki (FI)**

(72) Inventor : **TERVAMÄKI, Jukka**
**Harmaapaadentie 12 A**
**SF-00930 Helsinki (FI)**
Inventor : **HEINONEN, Mauno**
**Kerokuja 3 A 3**
**SF-01280 Vantaa (FI)**
Inventor : **PRIHA, Matti**
**Kontionmäentie 4 A**
**SF-01260 Vantaa (FI)**
Inventor : **KOIVISTO, Juha**
**Pohjoisranta 16 C 39**
**SF-00170 Helsinki (FI)**

(74) Representative : **West, Alan Harry et al**
**R.G.C. Jenkins & Co. 26 Caxton Street**
**London SW1H 0RJ (GB)**

## Description

This invention relates to dosage equipment incorporating a peristaltic pump for dispensing a plurality of liquid samples into a plurality of vessels displaceable relative to the pump, as set out in the first post of Claim 1; such apparatus is commercially available, but no publication of it is known to applicant. The equipment is particularly useful in a large number of laboratory analytical procedures.

Peristaltic pumps and similar pumping devices are well known and in common use in procedures where the volumes of liquid to be dispensed or transferred need not be particularly accurate. For example, US-A-3,778,195 describes a peristaltic type pump specifically designed for feeding liquids into the body and EP-A-0107440 describes a roller pump for enteral feeding of liquids. Neither of these devices is designed or adapted to dispense liquids with analytical accuracy. Other designs of peristaltic pump are also known, such as those described in US-A-3,832,096 and EP-A-0160388. The latter, particularly, involves a complex system in which the tension of a large number of hoses around the pump rotor must necessarily be adjusted together despite the fact that the hoses themselves must be replaced individually.

The use of peristaltic pumps in precise dosage apparatus has been made difficult by for example the elasticity of the hoses and the variability in the speed and acceleration of the rotor both of which contribute to the poor accuracy and reproducibility of successive dosage volumes, particularly when the pump is used at irregular intervals.

A further problem with peristaltic pumps and dosage apparatus comprising peristaltic pumps is that hose attachment is commonly fairly complex. Consequently, in order to replace the hoses, each hose must be detached and replaced individually making hose replacement a time-consuming and laborious task particularly when a large number of hoses is involved.

The present inventors have encountered in the past equipment for automatically dosing laboratory liquids including a peristaltic pump and a plurality of hoses tensioned around it, and a moveable carriage for conveying vessels below the dosing nozzles of the pump. Such apparatus, however, suffered from the same disadvantages as the pumping devices referred to above but nevertheless formed a starting point for the development of the present invention.

Accordingly, the present invention now provides apparatus for dispensing a plurality of liquid samples, comprising a peristaltic pump including a pump body and a rotor adapted to rotate on the body; a plurality of hoses adapted to be attached to the pump body and tensioned around the rotor and comprising a downward opening nozzle at the liquid dispersing end of each lose; and a carriage located bereath the nozzles displaceable relative to the pump for supporting a plurality of vessels adapted to receive liquid samples as they are dispensed, characterised in that the pump body includes an attachment block for the hoses; and the plurality of hoses is secured intermediate the ends of the hoses to an upstream manifold and a downstream manifold both adapted to be fastened readily to the attachment block on the pump body with the plurality of hoses tensioned around the rotor.

In accordance with the invention, the hose assembly or cassette may comprise a plurality of hoses fastened at spaced locations along their lengths to two manifolds by means of which they can be connected in the apparatus with the lengths of hoses between the manifolds being tensioned around the pump rotor. The manifolds are designed to be readily attached to and detached from the pump body to enable one hose cassette to be rapidly replaced by another, and the tensions of the hoses is suitably adjustable on an individual basis.

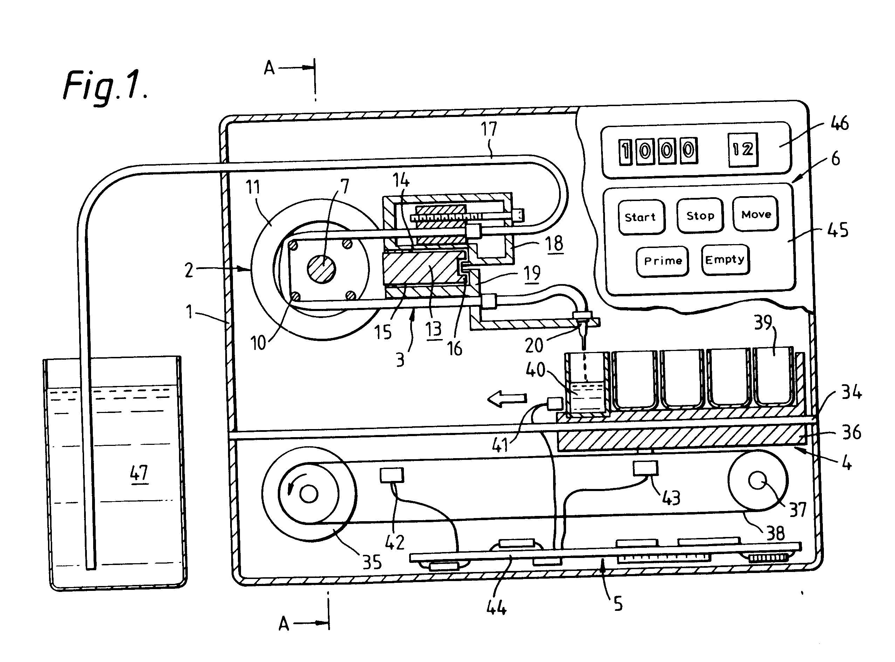

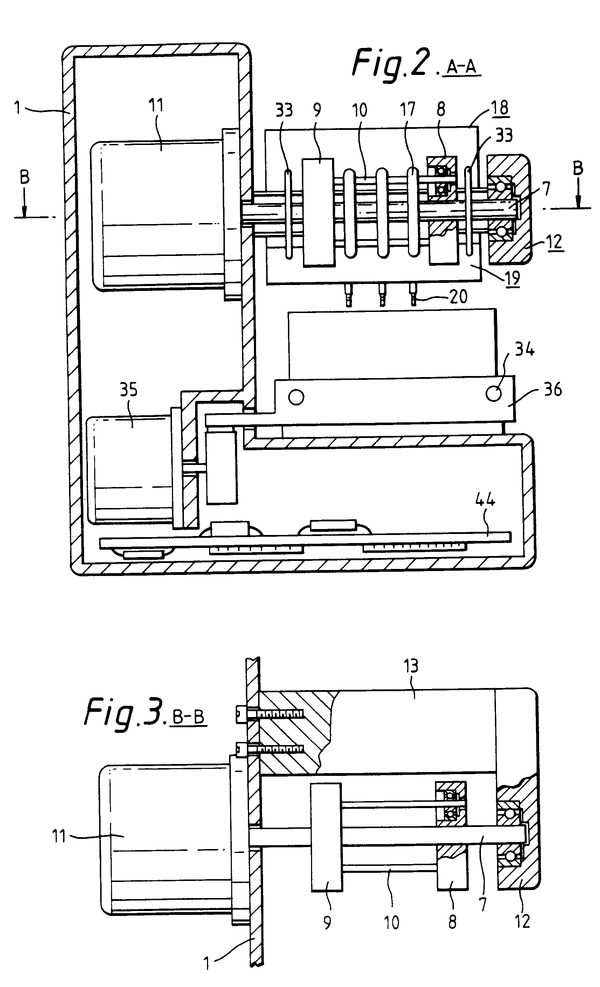

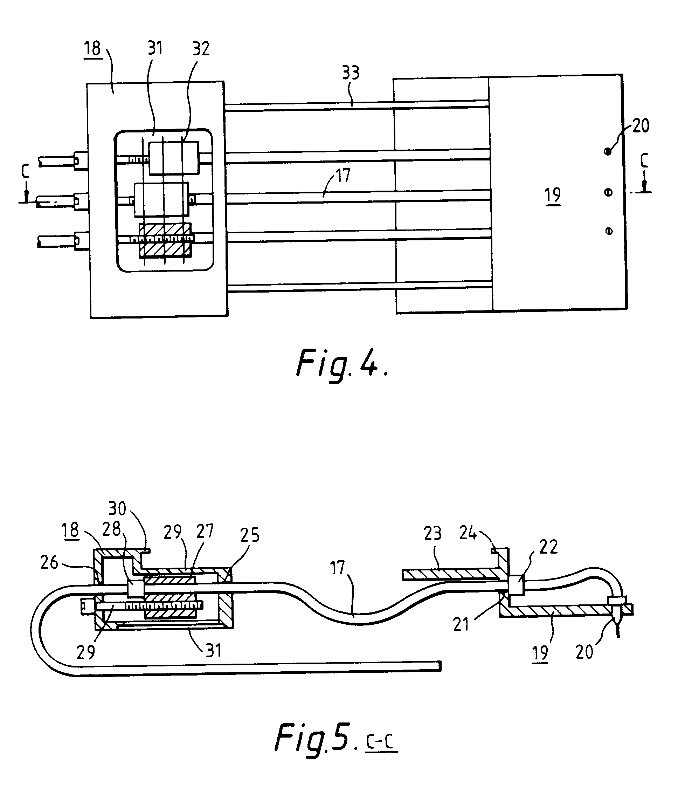

The present invention will now be described in greater detail by way of example only with reference to the accompanying drawings, in which Figure 1 is a schematic front view of the apparatus, partly in section; Figure 2 is a view along line A-A in Fig. 1; Figure 3 is a partial sectional view alone line B-B in Fig. 2 without the hoses; Figure 4 shows a detached hose cassette; and Figure 5 is a partial sectional view along line C-C in Fig. 4.

Referring to the drawings the main parts of the apparatus are a stationary part 2 of a peristaltic pump, a detachable hose cassette 3, a displaceable vessel carriage 4 with its conveyor means, built-in drive equipment 5, and control equipment 6, all fitted within a housing 1.

The peristaltic pump includes a rotor, which consists of a rotor shaft 7 and readily revolving journalled shafts 10 fitted axially outside the rotor shaft 7 between end flanges 8 and 9. The rotor shaft 7 is rotated by means of a stepping motor 11 and is journalled in a body 12 of the pump.

The body 12 further includes an attachment block 13, attached to the side of the rotor, for fastening the hose cassette. The attachement block 13 has plane upper and lower faces 14 and 15 and a groove 16 opening m its and face opposite the rotor shaft.

The hose cassette 3 includes three hoses 17 made of elastic material, which are attached intermediate their free ends to an upper upstream manifold 18 and to a lower downstream manifold 19. The length of the hoses intermediate the manifolds is such that the hoses are tensioned around the rotor while the hoses remain attached to the manifolds.

The liquid dispensing ends of the hoses 17 are attached to nozzles 20 that open downwards. At the manifold 19, the hoses are passed through holes 21 (Fig. 5), slippage of the hoses through the holes 21 towards the upper manifold 18 being prevented by means of limiters 22 attached to the hoses. The lower manifold 19 further comprises an upper face 23 which abuts the lower face 15 of the attachement block 13 as well as a flange 24 which is accommodated in the locking groove 16 when the cassette 3 is in position.

The upper manifold 18 is of box-like structures and at opposite sides is provided with aligned through holes 25 and 26 for the hoses 17. Inside the upper manifold, the hoses pass through tensioning blocks 27. The hoses are provided with limiters 28, which prevent slippage of the hoses through the tensioning blocks towards the lower manifold 19. In the upper manifold 18, the lower face 29 abuts the upper face 14 of the counter-piece 13 and a flange 30 is accommodated within the locking groove 16. The location of the tensioning blocks 27 within the upper manifold 18 is adjustable by means of calibration screws 29. The calibration screws are parallel to the hoses, and they revolve freely in holes in the manifold with their heads outside the manifold. The screws are threaded into bores provided in the tensioning blocks. The upper face of the upper manifold is provided with a transparent window 31 with graduation marks 32, by means of which the position of the tensioning blocks can be monitored.

The upper manifold 18 and the lower manifold 19 are interconnected by two unstretchable yarns 33 parallel to the hoses 17. The lengths of the yarns are such that they barely permit fastening of the upper and the lower manifolds on the attachement block 13 so that the hoses are tensioned around the rotor. Owing to the yarns, it is, however, not possible to over-stretch the hoses unnecessarily, thereby causing deformation that may change the pumping volume in the hoses.

It is possible to use hose cassettes having different numbers of hoses and different dosage volumes.

The carriage 36 moves below the nozzles 20 along rails 34 parallel to the hoses 17. The carriage is displaced by means of a stepping motor 35 whose shaft rotates an endless belt 38 which is attached to the carriage frame 36 and which runs over the shaft 37.

On the carriage 36, vessels 39 are placed in rows perpendicular to the direction of movement. Each row has a vessel below each nozzle 20.

At the front end of the carriage 36, there is a bleed vessel 40 of a width equal to the width of a row of vessels. The vessel is attached to the carriage by means of a T-slot joint in the lateral direction, and thereby it can be easily removed and replaced. The pump is programmed so as to dose into the bleed vessel once before the begining of the dosage proper. In this way it is ensured that there is no air in the hoses 17 and that the tension in the hoses has been stabilized to the level of the accelerations caused by normal operation. A detector 41 senses if the bleed vessel is in its position on the carriage and gives a signal to the steering system of the apparatus.

To identify the location of the carriage, the frame of the apparatus is provided with detectors 42 and 43.

The detectors 41, 42 and 43 may be mechanical, optical, capacitive, or magnetic. The detectors are connected to the electronics card 44 of the drive system. By means of the drive system, dosage takes place automatically in accordance with the starting values and commands given.

The necessary starting values and commands are given by means of the knobs 45 and controls 46 in the control equipment.

Fig. 1 also shows the vessel 47 containing the liquid to be dosed, into which the free ends of the hoses 17 have been submerged.

Before dosage is started, a hose cassette of the desired type is placed into the pump and the ends of the hoses are submerged into the vessel containing the liquid to be dosed. Dosage vessels of the desired sort and the bleeding vessel are placed in their correct locations on the carriage. The dosage volume is adjusted to the desired level, and the initial commands are given to the apparatus. The drive system then checks that the bleed vessel is in its place and that the carriage is in its starting location with the bleed vessel placed below the nozzles. Then, the first dose is dosed into the bleed vessel, and the carriage is shifted one step at a time while dosing the prescribed doses row by row into the vessels. The drive system identifies when the carriage has reached its opposite extreme position, and stops the dosage.

The apparatus can be modified from that described above.

Thus, in particular the shapes of the manifolds of the those cassette and of the pump attaching pieces may differ in detail. It is, however, preferable that the fastening of the hose cassette is a so-called fast coupling, so that the cassette can be placed in position by just lightly tensioning the hoses. The attachment block may also be placed elsewhere on the body of the pump, for example facing the end of the rotor.

Also, the carriage track may be made such that along the track, vessel carriages can be transported continuously through the apparatus.

In principle, it is also possible to use a stationary carriage and a displaceable pump.

## Claims

1. Apparatus for dispensing a plurality of liquid samples, comprising

a peristaltic pump including a pump body (12) and a rotor (7,8,9,10) adapted to rotate on the body;

a plurality of hoses (17) adapted to be attached to the pump body and tensioned around the rotor and comprising a downward opening nozzle at the liquid dispensing end of each hose; and

a carriage (4) located beneath the nozzles and displaceable relative to the pump for supporting a plurality of vessels (39,40) adapted to receive liquid samples as they are dispensed, characterised in that

the pump body includes an attachment block (13) for the hoses; and

the plurality of hoses (17) is secured intermediate the ends of the hoses to an upstream manifold (18) and a downstream manifold (19) both adapted to be fastened readily to the attachment block (13) of the pump body with the plurality of hoses tensioned around the rotor.

2. Apparatus according to claim 1, wherein the upstream and downstream manifolds (18,19) are held in position on the attachment block by the tension of the hoses around the rotor.

3. Apparatus according to claim 1 or claim 2, wherein the upstream and downstream manifolds (18,19) are connected by an unstretchable yarn (33) of such a length as to prevent overstretching of the hoses during fastening of the manifolds to the attachment block.

4. Apparatus according to any one of claims 1 to 3, wherein each of the upstream and downstream manifolds is provided with a flange (30,24) which is accommodated in a groove (16) in the attachment block.

5. Apparatus according to claim 4, wherein both flanges are accommodated in a single groove.

6. Apparatus according to any one of claims 1 to 5, wherein one of the manifolds (18) includes means for adjusting the tension of the hoses around the rotor.

7. Apparatus according to claim 6, wherein the tensioning means permits the tension of each hose to be adjusted individually.

8. Apparatus according to claim 7, wherein the tensioning means includes a tensioning block (27) fastened to the hose and moveable relative to the manifold (18) and an adjustment screw (29) by means of which the position of the tensioning block can be adjusted.

9. Apparatus according to claim 8, wherein the manifold (18) is of hollow construction and the tensioning block (27) is located within the interior of the manifold, the manifold being provided with a viewing window (31) through which the position of he tensioning block can be observed.

10. Apparatus according to any one of claims 1 to 9, wherein the pump and hoses are accommodated within a housing (1) and wherein the carriage (4) is displaceable on the housing.

11. Apparatus according to claim 10, wherein the carriage (4) is displaceable along a linear path.

12. Apparatus according to any one of claims 1 to 11, wherein the carriage serves also to support a bleed vessel (40) to receive liquid dispensed from the nozzles.

13. Apparatus according to claim 12, which comprises also a detector (41) for sensing the position of the bleed vessel.

**Patentansprüche**

1. Vorrichtung zum Ausgeben mehrerer Flüssigkeitsproben mit einer peristaltischen Pumpe,

die einen Pumpenkörper (12) und einen auf dem Pumpenkörper rotierenden Rotor (7, 8, 9, 10) aufweist,

mehreren Schläuchen (17), die am Pumpenkörper befestigbar sind, die um den Rotor gespannt sind und die eine nach unten geöffnete Düse am Ausgabeende eines jeden Schlauchs aufweisen und

einem Wagen (4), der unterhalb der Düsen und relativ zur Pumpe beweglich angeordnet ist, zum Tragen mehrerer Behälter (39, 40) zum Aufnehmen der Flüssigkeitsproben, sobald diese ausgegeben werden, dadurch gekennzeichnet, daß

die Pumpe ein Verbindungsteil (13) für die Schläuche aufweist und

die Schläuche (17) mittels den Schlauchenden an einem oberstromigen Verteiler (18) und an einem unterstromigen Verteiler (19) befestigt sind, die beide leicht am Verbindungsteil (13) des Pumpenkörpers befestigbar sind und die Schläuche um den Rotor gespannt sind.

2. Vorrichtung nach Anspruch 1, dadurch gekennzeichnet, daß der oberstromige und der unterstromige Verteiler (18, 19) durch die Spannung der Schläuche um den Rotor auf dem Verbindungsteil festgehalten werden.

3. Vorrichtung nach Anspruch 1 oder 2, dadurch gekennzeichnet, daß der oberstromige und der unterstromige Verteiler (18, 19) durch einen nicht dehnbaren Garn (33) verbunden sind, der eine solche Länge aufweist, daß ein Überdehnen der Schläuche während des Befestigens der Verteiler an das Verbindungsteil verhindert wird.

4. Vorrichtung nach einem der Ansprüche 1 bis 3, dadurch gekennzeichnet, daß jeder der oberstromigen und unterstromigen Verteiler mit einem Flansch (30, 24) versehen ist, der in einer Nut (16) im Verbindungsteil untergebracht ist.

5. Vorrichtung nach Anspruch 4, dadurch gekennzeichnet, daß beide Flansche in einer einzigen Nut untergebracht sind.

6. Vorrichtung nach einem der Ansprüche 1 bis 5, dadurch gekennzeichnet, daß einer der Verteiler ein Mittel zum Einstellen der Spannung der um den Rotor gespannten Schläuche aufweist.

7. Vorrichtung nach Anspruch 6, dadurch gekennzeichnet, daß das Spannungseinstellungsmittel es erlaubt, die Spannung eines jeden Schlauchs individuell einzustellen.

8. Vorrichtung nach Anspruch 7, dadurch gekennzeichnet, daß das Spannungseinstellungsmittel ein Spannungsteil (27), das am Schlauch befestigt und relativ zum Verteiler (18) bewegbar ist, und eine Einstellschraube (29) aufweist, durch die die Position des Spannungsteils eingestellt wird.

9. Vorrichtung nach Anspruch 8, dadurch gekennzeichnet, daß der Verteiler (18) einen ausgehöhlten Aufbau hat und das Spannungsteil (27) im Innern des Verteilers angeordnet ist, der mit einem Einsichtsfenster (31) versehen ist, durch das die Position des Spannungsteils beobachtet wird.

10. Vorrichtung nach einem der Ansprüche 1 bis 9, dadurch gekennzeichnet, daß die Pumpe und die Schläuche innerhalb eines Gehäuses (1) untergebracht sind und daß der Wagen (4) auf dem Gehäuse verschiebbar ist.

11. Vorrichtung nach Anspruch 10, dadurch gekennzeichnet, daß der Wagen (4) entlang eines geradlinigen Wegs verschiebbar ist.

12. Vorrichtung nach einem der Ansprüche 1 bis 11, dadurch gekennzeichnet, daß der Wagen auch zum Tragen eines Auslaufbehälters (40) dient, um eine aus den Düsen auslaufende Flüssigkeit aufzunehmen.

13. Vorrichtung nach Anspruch 12, die einen Detektor (41) zum Feststellen der Position des Auslaufbehälters enthält.

**Revendications**

1. Appareil pour distribuer une pluralité d'échantillons de liquide, comprenant :

une pompe péristaltique incluant un corps de pompe (12) et un rotor (7, 8, 9, 10) adapté pour tourner sur le corps,

une pluralité de tuyaux (17) adaptés pour être attachés au corps de pompe et mis en tension autour du rotor et comprenant une buse s'ouvrant vers le bas à l'extrémité de distribution du liquide de chaque tuyau, et

un chariot (4) situé sous les buses et déplaçable par rapport à la pompe pour porter une pluralité de récipients (39, 40) adaptés pour recevoir des échantillons de liquide à mesure que ceux-ci sont distribués, caractérisé en ce que :

le corps de pompe comprend un bloc (13) de fixation pour les tuyaux, et

la pluralité de tuyaux (17) est fixée dans une zone intermédiaire entre les extrémités des tuyaux à un collecteur amont (18) et à un collecteur aval (19) tous deux adaptés pour être attachés facilement au bloc (13) de fixation du corps de pompe avec la pluralité des tuyaux en tension autour du rotor.

2. Appareil selon la revendication 1, dans lequel les collecteurs amont et aval (18, 19) sont tenus en position sur le bloc de fixation par la tension des tuyaux autour du rotor.

3. Appareil selon la revendication 1 ou la revendication 2, dans lequel les collecteurs amont et aval (18, 19) sont reliés par un fil inextensible (33) de longueur telle qu'il empêche l'étirement excessif des tuyaux pendant la fixation des collecteurs au bloc de fixation.

4. Appareil selon l'une quelconque des revendications 1 à 3, dans lequel chaque collecteur amont et aval est pourvu d'une bride (30, 24) qui est reçue dans une rainure (16) du bloc de fixation.

5. Appareil selon la revendication 4, dans lequel les deux brides sont reçues dans une unique rainure.

6. Appareil selon l'une quelconque des revendications 1 à 5, dans lequel l'un (18) des collecteurs comprend un moyen pour le réglage de la tension des tuyaux autour du rotor.

7. Appareil selon la revendication 6, dans lequel le moyen de mise en tension permet le réglage individuel de la tension de chaque tuyau.

8. Appareil selon la revendication 7, dans lequel le moyen de mise en tension comprend un bloc (27) de mise en tension fixé au tuyau et mobile par rapport au collecteur (18) et une vis de réglage (29) à l'aide de laquelle la position du bloc de mise en tension peut être réglée.

9. Appareil selon la revendication 8, dans lequel le collecteur (18) est de construction creuse et le bloc (27) de mise en tension est logé à l'intérieur du collecteur, celui-ci étant muni d'une fenêtre d'observation (31) à travers laquelle la position du bloc de mise en tension peut être observée.

10. Appareil selon l'une quelconque des revendications 1 à 9, dans lequel la pompe et les tuyaux sont logés à l'intérieur d'une enveloppe (1) et dans lequel le chariot (4) est déplaçable sur l'enveloppe.

11. Appareil selon la revendication 10, dans lequel le chariot (4) est déplaçable le long d'un chemin linéaire.

12. Appareil selon l'une quelconque des revendications 1 à 11, dans lequel le chariot sert aussi à porter un récipient (40) de purge pour la récupération du liquide sortant des buses.

13. Appareil selon la revendication 12, qui comprend aussi un détecteur (41) pour détecter la position du récipient de purge.

Fig.1.

Start | Stop | Move

Prime | Empty

1000 | 12

# Fig.2. A-A

# Fig.3. B-B

Fig.4.

Fig.5. C-C